# EUROPÄISCHE PATENTSCHRIFT

(11) **EP 2 853 354 B1**
(45) Veröffentlichungstag und Bekanntmachung des Hinweises auf die Patenterteilung: **16.05.2018**
(21) Anmeldenummer: 13186420.9
(22) Anmeldetag: 27.09.2013
(51) Int. Cl.: B25J 9/16

(54) **Lageregelung mit Kollisionsvermeidung und Anpassung eines Maschinenmodells an die reale Maschine**
Position control with collision avoidance, and adaptation of a machine model to the real machine
Régulation de position avec prévention de collision et adaptation d'un modèle de machine à la machine réelle

(43) Veröffentlichungstag der Anmeldung: 01.04.2015
(73) Patentinhaber: Siemens Aktiengesellschaft, 80333 München (DE)
(72) Erfinder: Bretschneider, Jochen, Dr., 73732 Esslingen (DE); Ciesielski, Jens Stefan, 91058 Erlangen (DE)

(56) Entgegenhaltungen:
- WO-A1-2006/007833
- WO-A1-2008/025577
- US-A1- 2012 123 590
- ROOS E ET AL: "Off-line programming of industrial robots - Adaptation of simulated user programs to the real environment", COMPUTERS IN INDUSTRY, ELSEVIER SCIENCE PUBLISHERS. AMSTERDAM, NL, Bd. 33, Nr. 1, 1. August 1997 (1997-08-01) , Seiten 139-150, XP004096560, ISSN: 0166-3615, DOI: 10.1016/S0166-3615(97)00018-3

## Beschreibung

Die vorliegende Erfindung betrifft ein Betriebsverfahren für eine Maschine mit mehreren lagegeregelten Achsen,
- wobei eine Steuereinrichtung der Maschine unter Abarbeitung eines Systemprogramms die lagegeregelten Achsen gemäß einem Teileprogramm ansteuert,
- wobei durch die Ansteuerung der lagegeregelten Achsen ein Endeffektor entlang einer durch das Teileprogramm definierten Bahn über mindestens ein Zwischenglied relativ zu einem Grundkörper der Maschine lagegeregelt verfahren wird,
- wobei die Steuereinrichtung unter Abarbeitung des Systemprogramms vor dem Ansteuern der lagegeregelten Achsen mittels eines parametrierbaren Modells der Maschine prüft, ob das Verfahren des Endeffektors entlang der durch das Teileprogramm definierten Bahn kollisionsfrei möglich ist.

Die vorliegende Erfindung betrifft weiterhin ein Systemprogramm, wobei das Systemprogramm Maschinencode umfasst, der von einer Steuereinrichtung für eine Maschine mit mehreren lagegeregelten Achsen abarbeitbar ist, wobei die Abarbeitung des Systemprogramms durch die Steuereinrichtung bewirkt, dass die Steuereinrichtung die Maschine gemäß einem derartigen Betriebsverfahren betreibt.

Die vorliegende Erfindung betrifft weiterhin eine Steuereinrichtung für eine Maschine mit mehreren lagegeregelten Achsen, die mit einem derartigen Systemprogramm programmiert ist.

Die vorliegende Erfindung betrifft weiterhin eine Maschine mit mehreren lagegeregelten Achsen, durch deren Ansteuerung ein Endeffektor über mindestens ein Zwischenglied relativ zu einem Grundkörper der Maschine lagegeregelt verfahrbar ist, wobei die Maschine eine derartige Steuereinrichtung aufweist.

Teileprogramme für Maschinen mit mehreren lagegeregelten Achsen werden oftmals unter Verwendung von Programmiertools erstellt. Im Rahmen der Erstellung der Teileprogramme werden die Teileprogramme meistens auf Kollisionsfreiheit überprüft. Zu diesem Zweck wird von einer Recheneinrichtung eine Abarbeitung des Teileprogramms simuliert. Im Rahmen der simulierten Abarbeitung wird mittels eines Modells der Maschine geprüft, ob das Verfahren des Endeffektors entlang der durch das Teileprogramm definierten Bahn kollisionsfrei möglich ist. Das Modell der Maschine ist oftmals parametrierbar. In diesem Fall wird das Modell der Maschine derart parametriert, dass das entsprechend parametrierte Modell die Maschine so gut wie möglich abbildet. Insbesondere werden der Recheneinrichtung von einem Bediener der Recheneinrichtung die entsprechenden Parameter manuell vorgegeben.

Die Recheneinrichtung ist eine von der Steuereinrichtung der Maschine verschiedene Einrichtung. Ergibt die Simulation eine Kollision, wird das Teileprogramm geändert. Ergibt die Simulation keine Kollision, wird das Teileprogramm an die Steuereinrichtung übertragen und dort ausgeführt.

Es ist weiterhin bekannt, auch die Modellierung der Maschine an die Steuereinrichtung zu übertragen. In diesem Fall prüft - alternativ oder zusätzlich zur Prüfung mittels der Recheneinrichtung - die Steuereinrichtung unter Abarbeitung des Systemprogramms vor dem Ansteuern der lagegeregelten Achsen mittels des parametrierbaren Modells der Maschine, ob das Verfahren des Endeffektors entlang der durch das Teileprogramm definierten Bahn kollisionsfrei möglich ist.

Trotz der vorherigen Überprüfung des Teileprogramms mittels der Recheneinrichtung und/oder der Steuereinrichtung kommt es im Stand der Technik dennoch manchmal zu Kollisionen. Betriebsverfahren der eingangs genannten Art sind beispielsweise aus der US 2012/0 123 590 A1 und aus der WO 2008/025 577 A1 bekannt.

Die Aufgabe der vorliegenden Erfindung besteht darin, Möglichkeiten zu schaffen, aufgrund derer die Gefahr von Kollisionen zuverlässiger als bisher erkannt werden kann.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 13.

Erfindungsgemäß wird ein Betriebsverfahren der eingangs genannten Art dadurch ausgestaltet,
- dass die Steuereinrichtung vor dem Prüfen des Teileprogramms Anfangsmesswerte entgegennimmt, die für eine tatsächliche Konfiguration der Maschine charakteristisch sind und
- dass die Steuereinrichtung vor dem Prüfen des Teileprogramms anhand der Anfangsmesswerte Parameter des Modells ermittelt und das Modell gemäß den ermittelten Parametern parametriert.

Erfindungsgemäß wird also in automatisierter Weise das parametrierbare Modell der Maschine anhand der tatsächlichen Maschine parametriert. Es kann also nicht mehr geschehen, dass die Prüfung auf Kollisionsfreiheit mittels eines Modells der Maschine erfolgt, das nicht der realen Maschine entspricht.

Die Anfangsmesswerte können nach Bedarf bestimmt sein. Beispielsweise kann mittels optischer Erfassungseinrichtungen (Kamerasystem, Laserabtastung, ...) eine optische Erfassung (Kamerasystem, Laserabtastung, ...) eine optische Erfassung erfolgen. Auch können (aus Sicherheitsgründen: langsam) vorbestimmte Positionen angefahren werden und die zugehörigen Lageistwerte der lagegeregelten Achsen erfasst werden. Auch andere Vorgehensweisen sind möglich, beispielsweise die Verwendung berührender Erfassungseinrichtungen.

Die Parametrierung des Modells kann beispielsweise die Ausrichtung, die Orientierung, die Abmessungen von Elementen der Maschine und in Einzelfällen auch das Vorhandensein oder Nichtvorhandensein von Elementen der Maschine betreffen. Auch eine Erfassung eines Werkstücks und/oder einer Werkstückhalterung ist möglich.

Es ist möglich, dass das Modell der Maschine zunächst völlig unparametriert ist. Weiterhin ist es möglich, dass das Modell der Maschine zwar zunächst parametriert ist, diese Parametrierung jedoch schlichtweg überschrieben wird. Vorzugsweise aber ist das erfindungsgemäße Betriebsverfahren derart ausgestaltet, dass die Steuereinrichtung
- vor dem Entgegennehmen der Anfangsmesswerte eine Anfangsparametrierung des Modells entgegennimmt und durch die Anfangsparametrierung des Modells bestimmte Anfangsparameter des Modells ermittelt,
- Differenzen der Anfangsparameter von den anhand der Anfangsmesswerte ermittelten Parametern des Modells ermittelt,
- eine Fehlermeldung an einen Bediener der Maschine ausgibt, wenn die Differenzen einen vorbestimmten Grenzwert übersteigen, und anderenfalls das Modell gemäß den ermittelten Parametern parametriert.

In diesem Fall wird also anhand der Anfangsmesswerte nur noch eine Feinjustierung des Modells zugelassen. Durch diese Vorgehensweise kann insbesondere vermieden werden, dass versucht wird, ein Teileprogramm auszuführen, das für eine völlig anders konfigurierte Maschine entwickelt wurde. Im Rahmen der Fehlermeldung kann beispielsweise vom Bediener der Maschine eine Korrektur der Parametrierung angefordert werden.

Die Anfangsparametrierung kann der Steuereinrichtung losgelöst vom Teileprogramm zugeführt werden. Vorzugsweise nimmt die Steuereinrichtung jedoch die Anfangsparametrierung des Modells zusammen mit dem Teileprogramm entgegen. Diese Vorgehensweise ist besonders effizient.

In einer besonders bevorzugten Ausgestaltung der vorliegenden Erfindung nimmt die Steuereinrichtung während der Ansteuerung der lagegeregelten Achsen Betriebsmesswerte entgegen, ermittelt anhand der Betriebsmesswerte modifizierte Parameter des Modells und parametriert das Modell entsprechend den modifizierten Parametern. Weiterhin prüft die Steuereinrichtung in diesem Fall unter Abarbeitung des Systemprogramms vor einer Fortsetzung des Ansteuerns der lagegeregelten Achsen mittels des Modells der Maschine erneut, ob das Verfahren des Endeffektors entlang der durch das Teileprogramm definierten Bahn kollisionsfrei möglich ist. Dadurch kann die Wahrscheinlichkeit von Kollisionen reduziert werden, falls die Konfiguration der Maschine sich im Laufe der Zeit ändern sollte. Die Prüfung auf Kollisionsfreiheit umfasst hierbei - selbstverständlich - nicht nur die Prüfung, ob der Endeffektor selbst kollisionsfrei bleibt, sondern auch die Prüfung, ob andere, während des Verfahrens des Endeffektors bewegte Elemente kollisionsfrei bleiben, beispielsweise Zwischenglieder, über welche der Endeffektor verfahren wird.

Beispielsweise kann das Teileprogramm wiederholt ausgeführt werden und die Überprüfung zwischen den einzelnen Ausführungsvorgängen erfolgen. Die Erfassung der Betriebsmesswerte kann während der einzelnen Ausführungsvorgänge oder zwischen den Ausführungsvorgängen erfolgen. Beispielsweise können zwischen den einzelnen Ausführungsvorgängen mit den Anfangsmesswerten korrespondierende Betriebsmesswerte erfasst und verwertet werden. Weiterhin kann, falls es wider Erwarten doch zu einer Kollision kommen sollte, eine Korrektur des Modells anhand der Kollisionsdaten erfolgen.

Wie bereits erwähnt, ist es möglich, dass die Steuereinrichtung das Teileprogramm wiederholt ausführt. In diesem Fall wird in der Regel im Rahmen der jeweiligen Ausführung mittels des Endeffektors jeweils ein Werkstück bearbeitet. Die Bearbeitung kann eine materialabtragende (beispielsweise spanende) oder andersartige Bearbeitung sein. Vorzugsweise steuert die Steuereinrichtung vor der jeweiligen Bearbeitung des jeweiligen Werkstücks Messeinrichtungen der Maschine an und erfasst dadurch tatsächliche Abmessungen des jeweiligen Werkstücks. In diesem Fall ist es möglich, dass die Steuereinrichtung vor der jeweiligen Ausführung des Teileprogramms prüft, ob das Verfahren des Endeffektors entlang der durch das Teileprogramm definierten Bahn in Bezug auf das jeweilige Werkstück kollisionsfrei möglich ist. Im Rahmen dieser Prüfung werden - selbstverständlich - die tatsächlichen Abmessungen des jeweiligen Werkstücks mit berücksichtigt.

In einer besonders bevorzugten Ausgestaltung der vorliegenden Erfindung ermittelt die Steuereinrichtung anhand des Modells der Maschine Paare von Elementen der Maschine und prüft im Rahmen der Prüfung auf Kollisionsfreiheit ausschließlich die Paare von Elementen auf Kollisionsfreiheit. Durch diese Vorgehensweise kann der Aufwand, der für die Prüfung auf Kollisionsfreiheit erforderlich ist, minimiert werden.

Vorzugsweise nimmt die Steuereinrichtung während der Ansteuerung der lagegeregelten Achsen Belastungen der lagegeregelten Achsen und/oder Belastungen von drehzahlgeregelten Achsen entgegen, vergleicht die entgegengenommenen Belastungen mit Grenzbelastungen und ermittelt anhand des Vergleichs, ob eine Kollision aufgetreten ist. Auf diese Weise ist eine Erkennung von Kollisionen besonders einfach und zuverlässig möglich. Die Grenzbelastungen können von Ort und Zeit abhängig sein. Sie können beispielsweise mittels eines physikalischen Modells der Maschine und des Bearbeitungsprozesses ermittelt werden. Sie werden entweder in der Simulation oder in der Steuerung anhand des Modells vorausgerechnet.

In analoger Weise ist es möglich, dass die Steuereinrichtung während der Ansteuerung der lagegeregelten Achsen Belastungen der lagegeregelten Achsen und/oder Belastungen der drehzahlgeregelten Achsen entgegennimmt, die entgegengenommenen Belastungen mit Belastungsschwellen vergleicht und anhand des Vergleichs ermittelt, ob der Endeffektor sich im Eingriff mit einem Werkstück befindet. Die Belastungsschwellen liegen in diesem Fall unterhalb der Grenzbelastungen. Die Belastungsschwellen können - analog zu den Grenzbelastungen - von Ort und Zeit abhängig sein.

Vorzugsweise enthält das Teileprogramm eine Information darüber, in welchen Abschnitten der vom Endeffektor abzufahrenden Bahn der Endeffektor sich im Eingriff mit einem Werkstück befinden soll. Im Falle der Prüfung auf Kollision anhand eines Vergleichs mit den Grenzbelastungen können in diesem Fall beispielsweise die Grenzbelastungen in Abhängigkeit davon festgelegt werden, ob der Endeffektor sich im Eingriff mit dem Werkstück befindet oder nicht. Im Falle des Vergleichs mit den Belastungsschwellen kann das Teileprogramm auf Plausibilität und/oder das Werkstück auf Korrektheit überprüft werden.

Vorzugsweise protokolliert die Steuereinrichtung während der Ansteuerung der lagegeregelten Achsen eine Sequenz von Lagesollwerten der lagegeregelten Achsen und/oder eine Sequenz von Lageistwerten der lagegeregelten Achsen, so dass zu jedem Zeitpunkt zumindest für einen vorbestimmten Zeitraum die jüngsten Lagesollwerte und/oder Lageistwerte der lagegeregelten Achsen zur Verfügung stehen. In diesem Fall kann insbesondere im Falle einer Kollision rückblickend auf einfache Weise rekonstruiert werden, wie es zu der Kollision kam.

Im Falle einer Protokollierung ist es weiterhin möglich, dass die Steuereinrichtung während der Ansteuerung der lagegerewerten invers ansteuert. Die Protokollierung bietet dadurch insbesondere den Vorteil, den Endeffektor auf genau derselben Bahn zurückzufahren, auf welcher er in die Kollision hineingefahren wurde. Alternativ ist es möglich, dass die Steuereinrichtung im Falle einer Kollision anhand des Modells eine Richtung und/oder Orientierung des Endeffektors im dreidimensionalen geometrischen Raum ermittelt, in welcher der größte Freiraum zu erwarten ist, und den Endeffektor in diese Richtung und/oder Orientierung verfährt.

Im Falle einer Kollision ist es weiterhin von Vorteil, wenn die Steuereinrichtung eine Spannvorrichtung des Endeffektors und/oder eine Werkstückhalterung zum Halten eines Werkstücks öffnet. Durch diese Vorgehensweise können Verspannungen auf einfache Weise gelöst werden und etwaige Schäden minimiert werden. Auch ist das Beheben einer Kollision einfacher möglich.

Die Aufgabe wird weiterhin durch ein Systemprogramm mit den Merkmalen des Anspruchs 14 gelöst. Erfindungsgemäß bewirkt die Abarbeitung des Systemprogramms durch die Steuereinrichtung, dass die Steuereinrichtung die Maschine gemäß einem erfindungsgemäßen Betriebsverfahren betreibt. Das Systemprogramm kann insbesondere auf einem Datenträger in maschinenlesbarer Form gespeichert sein.

Die Aufgabe wird weiterhin durch eine Steuereinrichtung mit den Merkmalen des Anspruchs 16 gelöst. Erfindungsgemäß ist die Steuereinrichtung mit einem erfindungsgemäßen Systemprogramm programmiert.

Die Aufgabe wird weiterhin durch eine Maschine mit den Merkmalen des Anspruchs 17 gelöst. Erfindungsgemäß wird eine Maschine der eingangs genannten Art dadurch ausgestaltet, dass die Maschine eine erfindungsgemäße Steuereinrichtung aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine mit lagegeregelten Achsen,
- FIG 2: ein Ablaufdiagramm,
- FIG 3: eine von einem Endeffektor abzufahrende Bahn und
- FIG 4 bis 10: Ablaufdiagramme.

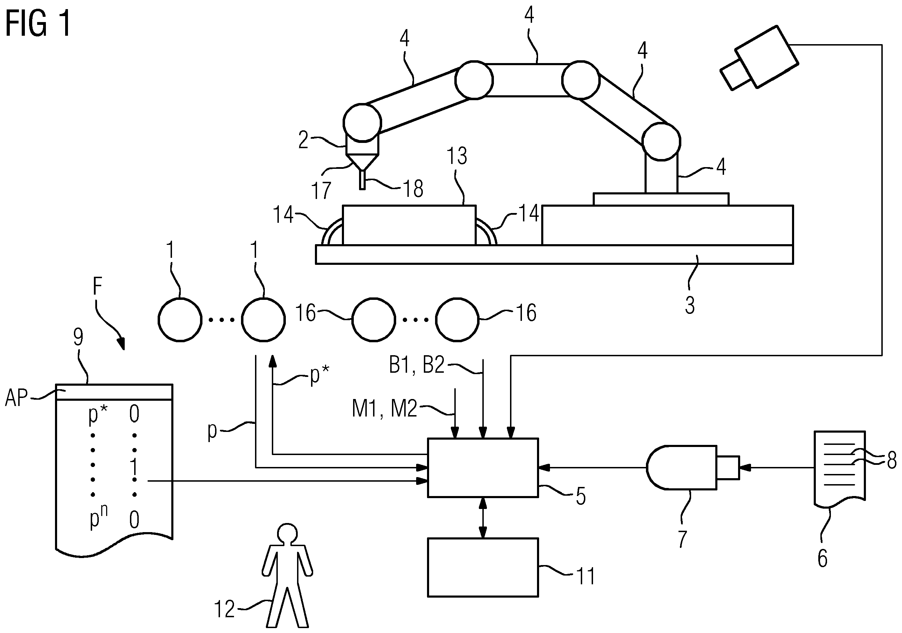

Gemäß FIG 1 weist eine Maschine mehrere lagegeregelte Achsen 1 auf. Durch entsprechende Ansteuerung der lagegeregelten Achsen 1 ist ein Endeffektor 2 (beispielsweise ein Werkzeughalter) relativ zu einem Grundkörper 3 der Maschine lagegeregelt verfahrbar. Das Verfahren des Endeffektors 2 erfolgt über mindestens ein Zwischenglied 4, meist entsprechend der Darstellung in FIG 1 über mehrere Zwischenglieder 4.

Die Maschine weist weiterhin eine Steuereinrichtung 5 auf. Die Steuereinrichtung 5 ist als softwareprogrammierbare Steuerung ausgebildet, beispielsweise als numerische Steuerung (CNC) oder als Bewegungssteuerung (MC = motion control). Die Steuereinrichtung 5 ist mit einem Systemprogramm 6 programmiert. Das Systemprogramm 6 kann der Steuereinrichtung 5 beispielsweise über einen Datenträger 7 zugeführt werden, auf dem das Systemprogramm 6 in maschinenlesbarer Form gespei-Steuereinrichtung 5 ist mit einem Systemprogramm 6 programmiert. Das Systemprogramm 6 kann der Steuereinrichtung 5 beispielsweise über einen Datenträger 7 zugeführt werden, auf dem das Systemprogramm 6 in maschinenlesbarer Form gespeichert ist. Insbesondere kann das Systemprogramm 6 auf dem Datenträger 7 in elektronischer Form gespeichert sein. Der Datenträger 7 ist in FIG 1 als USB-Memory stick dargestellt. Diese Darstellung ist jedoch nur rein beispielhaft.

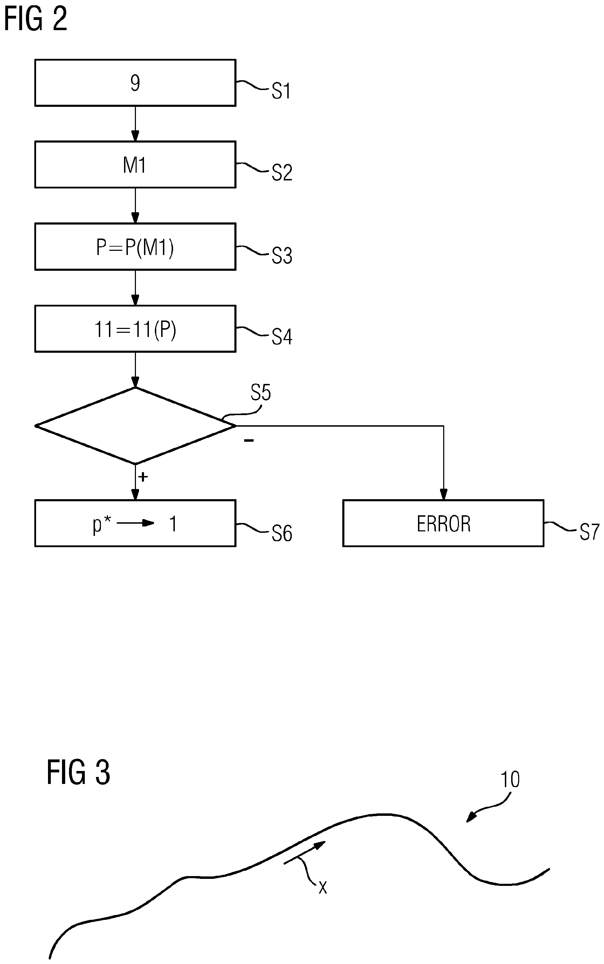

Das Systemprogramm 6 umfasst Maschinencode 8. Der Maschinencode 8 ist von der Steuereinrichtung 5 abarbeitbar. Die Abarbeitung des Maschinencodes 8 durch die Steuereinrichtung 5 wirkt, dass die Steuereinrichtung 5 die Maschine gemäß einem Betriebsverfahren betreibt, das nachstehend in Verbindung mit FIG 2 näher erläutert wird.

Gemäß FIG 2 nimmt die Steuereinrichtung 5 in einem Schritt S1 ein Teileprogramm 9 entgegen. Das Teileprogramm 9 definiert (siehe FIG 3) eine Bahn 10, entlang derer der Endeffektor 2 in einer Verfahrrichtung x verfahren werden soll. Das Teileprogramm 9 enthält zu diesem Zweck explizit oder implizit für die lagegeregelten Achsen 1 eine Sequenz von Lagesollwerten p*, die nacheinander an die entsprechenden lagegeregelten Achsen 1 ausgegeben werden. Der Raum, für den die Bahn 10 definiert ist, weist für jede lagegeregelte Achse 1 jeweils eine eigene Dimension auf. Der Raum kann, nicht aber muss, mit dem dreidimensionalen geometrischen Raum korrespondieren. Die Lagesollwerte p* legen zu jedem Zeitpunkt eine Lage und eine Orientierung des Endeffektors 2 im dreidimensionalen geometrischen Raum fest.

Der Steuereinrichtung 5 ist weiterhin ein Modell 11 (siehe FIG 1) bekannt, das die Maschine vom Typ her modelliert. In einem Schritt S2 nimmt die Steuereinrichtung 5 Anfangsmesswerte M1 entgegen. Die Anfangsmesswerte M1 sind für eine tatsächliche Konfiguration der Maschine charakteristisch. Beispielsweise können anhand der Anfangsmesswerte M1 tatsächliche Längen oder andere Abmessungen der Zwischenglieder 4 oder die Lage von Gelenken zwischen Zwischengliedern 4 ermittelt werden.

Das Modell 11 ist parametrierbar. Die Parametrierung des Modells 11 dient dazu, das Modell 11 an die konkrete Maschine 1 anzupassen. In einem Schritt S3 ermittelt die Steuereinrichtung 5 daher anhand der Anfangsmesswerte M1 Parameter P des Modells 11. In einem Schritt S4 parametriert die Steuereinrichtung 5 sodann das Modell 11 entsprechend den ermittelten Parametern P.

Nach dem Parametrieren des Modells 11 prüft die Steuereinrichtung 5 in einem Schritt S5 in an sich bekannter Weise, ob das Verfahren des Endeffektors 2 entlang der durch das Teileprogramm 9 definierten Bahn 10 kollisionsfrei möglich ist. Die Prüfung auf Kollisionsfreiheit umfasst nicht nur die Prüfung, ob der Endeffektor 2 selbst kollisionsfrei bleibt, sondern auch die Prüfung, ob beispielsweise die Zwischenglieder 4 untereinander und/oder bezüglich des Grundkörpers 3 kollisionsfrei bleiben. Die Steuereinrichtung 5 simuliert also im Schritt S5 schrittweise die Wirkungen, die sich durch das Ausgeben der Sequenz von Lagesollwerten p* an die lagegeregelten Achsen 1 ergeben würden.

Wenn im Schritt S5 keine Kollision erkannt wurde, geht die Steuereinrichtung 5 zu einem Schritt S6 über. Im Schritt S6 steuert die Steuereinrichtung 5 die lagegeregelten Achsen 1 gemäß dem Teileprogramm 9 an. Sie gibt also nacheinander die Sequenz von Lagesollwerten p* an die lagegeregelten Achsen 1 aus. Durch die Ansteuerung der lagegeregelten Achsen 1 wird der Endeffektor 2 über das Zwischenglied 4 bzw. die Zwischenglieder 4 entlang der Bahn 10 lagegeregelt verfahren.

Wenn im Schritt S5 hingegen eine Kollision erkannt wurde, geht die Steuereinrichtung 5 zu einem Schritt S7 über. Im Schritt S7 führt die Steuereinrichtung 5 eine Fehlerbehandlung durch. Insbesondere kann die Steuereinrichtung 5 im Schritt S7 die Abarbeitung des Teileprogramms 9 unterdrücken und stattdessen eine Fehlermeldung an einen Bediener 12 der Maschine ausgeben.

Es ist möglich, dass das Teileprogramm 9 von der Steuereinrichtung 5 vorab vollständig geprüft wird, bevor erstmals ein Ausgeben von Lagesollwerten p* an die lagegeregelten Achsen 1 erfolgt. Alternativ ist es möglich, das Teileprogramm 9 im Schritt S5 abschnittsweise zu prüfen und während des Ausgebens des geprüften Abschnittes des Teileprogramms 9 (Schritt S6) bereits den nächsten Abschnitt des Teileprogramms 9 zu prüfen.

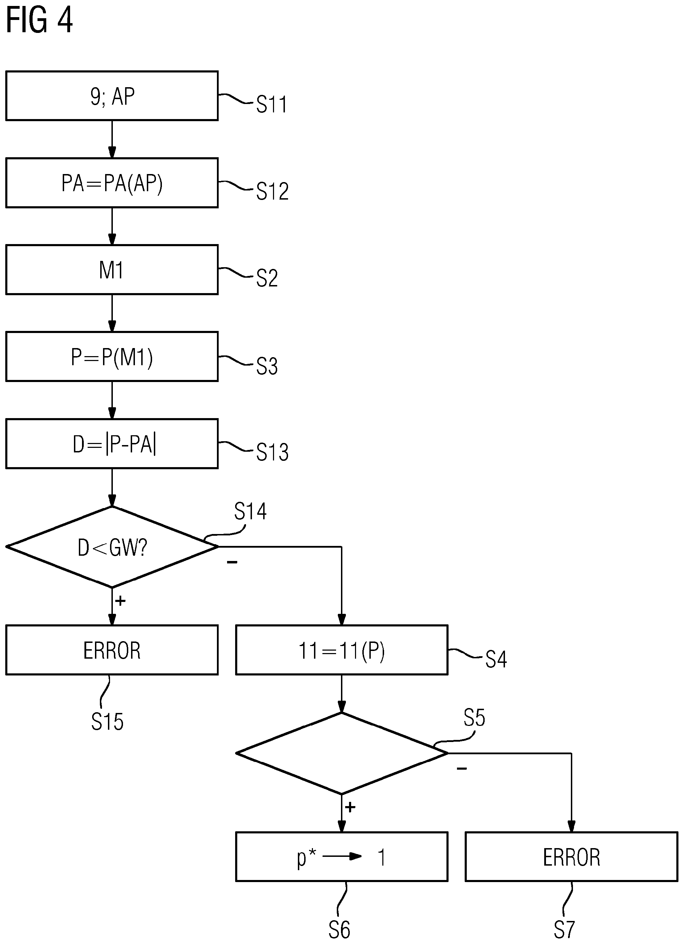

Es ist möglich, dass das Modell 11 von der Steuereinrichtung 5 im Rahmen des Schrittes S4 aus einem undefinierten Zustand heraus parametriert wird. Vorzugsweise jedoch nimmt die Steuereinrichtung 5 gemäß FIG 4 zunächst in einem Schritt S11 eine Anfangsparametrierung AP des Modells 11 entgegen. In diesem Fall ermittelt die Steuereinrichtung 5 im Rahmen eines Schrittes S12 Anfangsparameter PA. Vor der Ausführung des Schrittes S4 ermittelt die Steuereinrichtung 5 in diesem Fall weiterhin in einem Schritt S13 Differenzen D der Anfangsparameter PA von den Parametern P, welche die Steuereinrichtung 5 im Schritt S3 anhand der Anfangsmesswerte M1 ermittelt hat. In einem Schritt S14 prüft die Steuereinrichtung 5 weiterhin, ob die Differenzen D einen vorbestimmten Grenzwert GW übersteigen. Wenn dies der Fall ist, geht die Steuereinrichtung 5 zu einem Schritt S15 über. Im Schritt S15 gibt die Steuereinrichtung 5 eine Fehlermeldung an den Bediener 12 aus. Anderenfalls, wenn die Differenzen D den Grenzwert GW also nicht übersteigen, geht die Steuereinrichtung 5 zum Schritt S4 über.

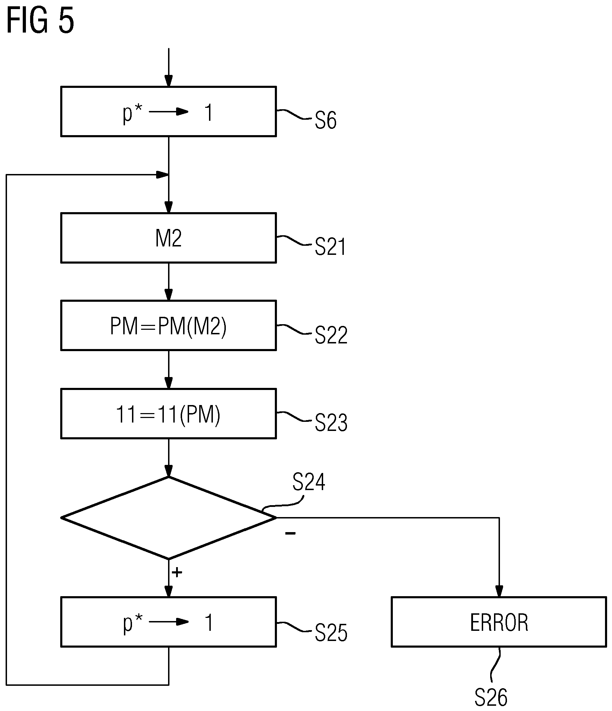

Die Anfangsparametrierung AP kann von der Steuereinrichtung 5 zu einem beliebigen Zeitpunkt entgegengenommen werden, sofern der Zeitpunkt vor der Prüfung des Teileprogramms 9 auf Kollisionsfreiheit liegt. Vorzugsweise aber nimmt die Steuereinrichtung 5 entsprechend der Darstellung in FIG 4 die Anfangsparametrierung AP zusammen mit dem Teileprogramm 9 entgegen. FIG 5 zeigt eine mögliche Ausgestaltung des Schrittes S6 von FIG 2 bzw. von FIG 4. Gemäß FIG 4 kann das erfindungsgemäße Betriebsverfahren dahingehend modifiziert werden, dass die Steuereinrichtung 5 in einem Schritt S21 während der Ansteuerung der lagegeregelten Achsen 1 Betriebsmesswerte M2 entgegennimmt. In diesem Fall ermittelt die Steuereinrichtung 5 vorzugsweise in einem Schritt S22 anhand der Betriebsmesswerte M2 modifizierte Parameter PM des Modells 11. Weiterhin parametriert die Steuereinrichtung 5 in diesem Fall in einem Schritt S23 das Modell 11 entsprechend den modifizierten Parametern PM. Weiterhin prüft die Steuereinrichtung 15 in diesem Fall in einem Schritt S24 vor einer Fortsetzung des Ansteuerns der lagegeregelten Achsen 1 mittels des Modells 11 der Maschine erneut, ob das Verfahren des Endeffektors 2 entlang der Bahn 10 kollisionsfrei möglich ist. Je nach Ergebnis der Prüfung wird entweder in einem Schritt S25 die Ansteuerung der lagegeregelten Achsen 1 fortgesetzt oder in einem Schritt S26 eine Fehlermeldung an den Bediener 12 ausgegeben. Die Vorgehensweise von FIG 5 ist insbesondere dann sinnvoll, wenn das Teileprogramm 9 wiederholt ausgeführt wird. In diesem Fall können die Schritte S21 bis S24 beispielsweise jeweils zwischen zwei Ausführungen des Teileprogramms 9 ausgeführt werden.

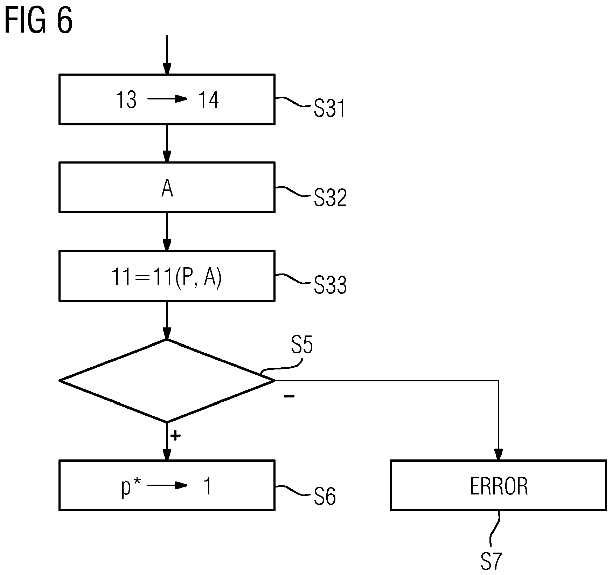

Durch die Ausführung des Teileprogramms 9 wird oftmals ein Werkstück 13 (siehe FIG 1) bearbeitet. Die Bearbeitung kann in einer materialabtragenden Bearbeitung bestehen, beispielsweise einer spanenden Bearbeitung. Es sind jedoch auch andere Bearbeitungsvorgänge möglich. Im Falle der Bearbeitung eines Werkstücks 13 wird das Teileprogramm 9 meist wiederholt ausgeführt, wobei jeweils ein anderes Werkstück 13 bearbeitet wird. In diesem Fall ist die Vorgehensweise von FIG 2 vorzugsweise wie folgt weiter ausgestaltet:
Gemäß FIG 6 wird zunächst in einem Schritt S31 das Werkstück 13 in einer Werkstückhalterung 14 (siehe FIG 1) befestigt. Es ist möglich, dass der Schritt S31 automatisiert von der Steuereinrichtung 5 ausgeführt wird. Alternativ ist es möglich, dass der Schritt S31 vom Bediener 12 (mit oder ohne motorische Hilfsmittel) ausgeführt wird. Sodann steuert die Steuereinrichtung 5 in einem Schritt S32 Messeinrichtungen 15 der Maschine an. Die Messeinrichtungen 15 sind in FIG 1 als Kamerasystem dargestellt. Es sind jedoch auch andere Ausgestaltungen möglich. Aufgrund der Ansteuerung der Messeinrichtungen 15 erfasst die Steuereinrichtung 5 tatsächliche Abmessungen A des jeweiligen Werkstücks 13. In einem Schritt S33 parametriert die Steuereinrichtung 5 das Modell 11 anhand der Parameter P (bzw. PM) und der erfassten Abmessungen A. Sodann prüft die Steuereinrichtung 5 im Schritt S5, ob das Verfahren des Endeffektors 2 entlang der Bahn 10 in Bezug auf das jeweilige Werkstück 13 kollisionsfrei möglich ist. Ist die Bearbeitung möglich, geht die Steuereinrichtung 5 zum Schritt S6 über. Anderenfalls geht die Steuereinrichtung 15 zum Schritt S7 über, in dem sie eine entsprechende Fehlermeldung an den Bediener 12 ausgibt.

Die letztgenannte Ausgestaltung wurde obenstehend ausgehend von der Vorgehensweise gemäß FIG 2 erläutert. Sie ist jedoch ohne weiteres auch bei der Ausgestaltung gemäß FIG 4 oder gemäß FIG 5 anwendbar.

Die Maschine besteht in der Regel aus einer Vielzahl von Elementen, von denen ein Teil beweglich und ein anderer Teil starr ist. Beispiele derartiger Elemente sind der Grundkörper 3, die Zwischenglieder 4, der Endeffektor 2, eine Spindel, das Werkstück 13, die Werkstückhalterung 14 und dergleichen mehr. In dem Modell 11 der Maschine werden die einzelnen Elemente oftmals durch einfache geometrische Körper wie beispielsweise Zylinder, Quader, Kugeln und dergleichen modelliert. Theoretisch ist es denkbar, zur Prüfung der Kollisionsfreiheit stets alle Elemente paarweise auf Kollisionsfreiheit zu prüfen. Vorzugsweise jedoch ermittelt die Steuereinrichtung 5 anhand des Modells 11 der Maschine Paare von Elementen. Ausschließlich diese Paare werden von der Steuereinrichtung 5 im Rahmen beispielsweise des Schrittes S5 auf Kollisionsfreiheit geprüft. Die Ermittlung der Paare ist Fachleuten bekannt und muss daher nicht im einzelnen näher erläutert werden.

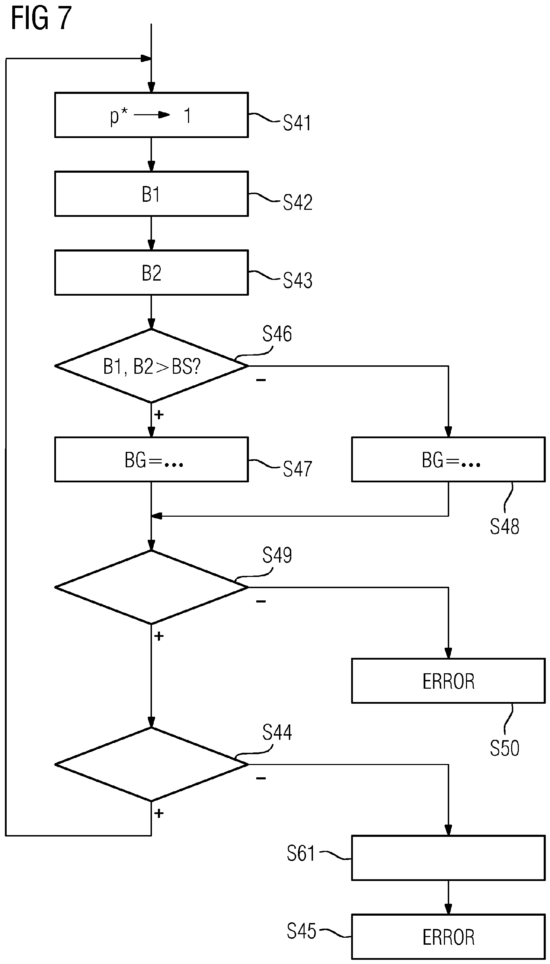

Der Schritt S6 von FIG 2, FIG 4 und FIG 6 ist vorzugsweise so ausgestaltet, die dies nachfolgend in Verbindung mit FIG 7 erläutert wird.

Gemäß FIG 7 steuert die Steuereinrichtung 5 im Rahmen eines Schrittes S41 die lagegeregelten Achsen 1 an. Gleichzeitig hier zu nimmt die Steuereinrichtung 5 in einem Schritt S42 Belastungen B1 der lagegeregelten Achsen 1 (beispielsweise die Motorströme) entgegen. Alternativ oder zusätzlich zu den Belastungen B1 der lagegeregelten Achsen 1 kann die Steuereinrichtung 5 in einem Schritt S43 Belastungen B2 von drehzahlgeregelten Achsen 16 entgegennehmen. Die Belastungen B1, B2 vergleicht die Steuereinrichtung 15 in einem Schritt S44 mit Grenzbelastungen BG. Wenn die Grenzbelastungen BG überschritten werden, ist dies ein Indiz für eine Kollision. In diesem Fall geht die Steuereinrichtung 5 zu einem Schritt S45 über, in dem sie eine Fehlermaßnahme ausführt. Anderenfalls geht die Steuereinrichtung 5 zum Schritt S41 zurück, so dass die weitere Abarbeitung des Teileprogramms 9 fortgesetzt wird. Die Grenzbelastungen BG können individuell für die jeweilige lagegeregelte oder drehzahlgeregelte Achse 1, 16 festgelegt sein. Sie können ferner von weiteren Umständen abhängen. Sie können insbesondere dynamisch vom Ort und/oder der Geschwindigkeit abhängen, mit welcher der Endeffektor 2 und eventuell Zwischenglieder 4 verfahren werden. Die Grenzbelastungen BG können gegebenenfalls im Rahmen des Teileprogramms 9 mit festgelegt werden.

Alternativ oder zusätzlich zum Vergleich der Belastungen B1, B2 mit den Grenzbelastungen BG ist es möglich, dass die Steuereinrichtung 5 die entgegengenommenen Belastungen B1, B2 in einem Schritt S46 mit Belastungsschwellen BS vergleicht. In diesem Fall kann die Steuereinrichtung 5 anhand des Schrittes S46 ermitteln, ob der Endeffektor 2 sich im Eingriff mit dem jeweils bearbeiteten Werkstück 13 befindet. Die Belastungsschwellen BS können - analog zu den Grenzbelastungen BG - individuell für die jeweilige lagegeregelte oder drehzahlgeregelte Achse 1, 16 festgelegt sein. Sie können ferner von weiteren Umständen abhängen. Je nachdem, ob der Endeffektor 2 sich im Eingriff befindet oder nicht, können beispielsweise in Schritten S47 und S48 die Grenzbelastungen BG entsprechend festgesetzt werden. Die Belastungsschwellen BS können - analog zu den Grenzbelastungen BG - dynamisch vom Ort und/oder der Geschwindigkeit abhängen, mit welcher der Endeffektor 2 und eventuell Zwischenglieder 4 verfahren werden. Sie können gegebenenfalls im Rahmen des Teileprogramms 9 mit festgelegt werden.

Vorzugsweise enthält das Teileprogramm 9 eine Information darüber, in welchen Abschnitten der Bahn 10 der Endeffektor 2 sich im Eingriff mit dem Werkstück 13 befinden soll. Beispielsweise kann innerhalb des Teileprogramms 9 (siehe FIG 1) jeder Gruppe von Lagesollwerten p* ein Flag F zugeordnet sein. Je nachdem, ob das Flag F den Wert 1 oder den Wert 0 aufweist, soll sich der Endeffektor 2 im Eingriff mit dem Werkstück 13 befinden oder nicht. In diesem Fall kann insbesondere die Steuereinrichtung 15 in einem Schritt S49 erkennen, ob - bezogen auf die Frage Eingriff oder Nichteingriff - der Sollzustand des Endeffektors 2 mit dem Istzustand des Endeffektors 2 übereinstimmt. Gegebenenfalls kann in einem Schritt S50 zu einer Fehlerbehandlung übergegangen werden.

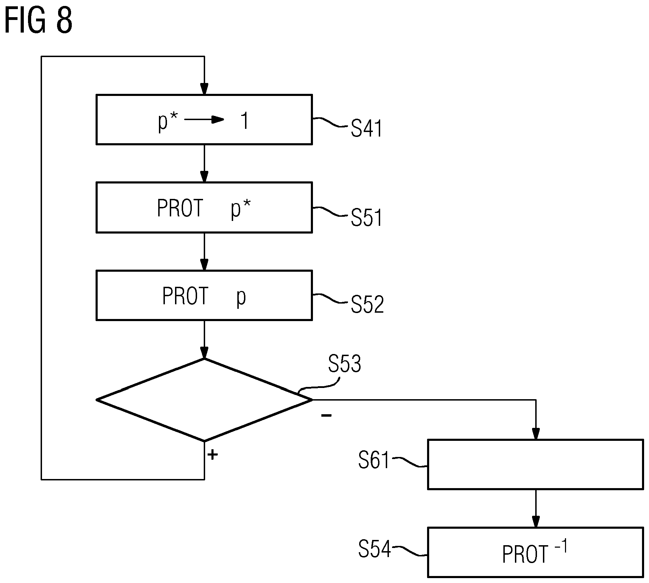

In einer besonders bevorzugten Ausgestaltung (siehe FIG 8) protokolliert die Steuereinrichtung 5 während der Ansteuerung der lagegeregelten Achsen 1 in einem Schritt S51 entsprechend der ausgegebenen Reihenfolge eine Sequenz von Lagesollwerten p*. Es ist möglich, das Protokoll stets nur zu vergrößern, so dass mit fortschreitender Zeitdauer ein immer längeres Protokoll entsteht. Alternativ können veraltete Teile des Protokolls wieder gelöscht oder überschrieben werden. Unabhängig davon, ob die eine oder die andere Vorgehensweise ergriffen wird, stehen durch diese Vorgehensweise jedoch zu jedem Zeitpunkt für einen vorbestimmten Zeitraum die jüngsten Lagesollwerte p* der lagegeregelten Achsen 1 zur Verfügung. Alternativ oder zusätzlich kann in einem Schritt S52 eine analoge Vorgehensweise für die Lageistwerte p ergriffen werden.

Wie bereits erwähnt, prüft die Steuereinrichtung 5 - beispielsweise in einem Schritt S53 - während der Ansteuerung der lagegeregelten Achsen 1 laufend, ob eine Kollision eintritt. Der Schritt S53 entspricht im Wesentlichen dem Schritt S44 von FIG 7. Wenn eine Kollision eintritt, ist es daher möglich, dass die Steuereinrichtung 5 nach Erkennen einer Kollision in einem Schritt S54 die lagegeregelten Achsen 1 gemäß der protokollierten Sequenz von Lagesollwerten p* und/ oder Lageistwerten p invers ansteuert. Die entsprechenden Werte p, p* werden in diesem Fall also in umgekehrter Reihenfolge an die lagegeregelten Achsen 1 ausgegeben. Unabhängig davon, ob die Kollision auf einfache Weise wieder aufgehoben werden kann, steht somit in jedem Fall ein möglicher Weg zurück zur Verfügung, nämlich exakt auf der gleichen Bahn 10 wie zuvor, nur mit inverser Bewegungsrichtung.

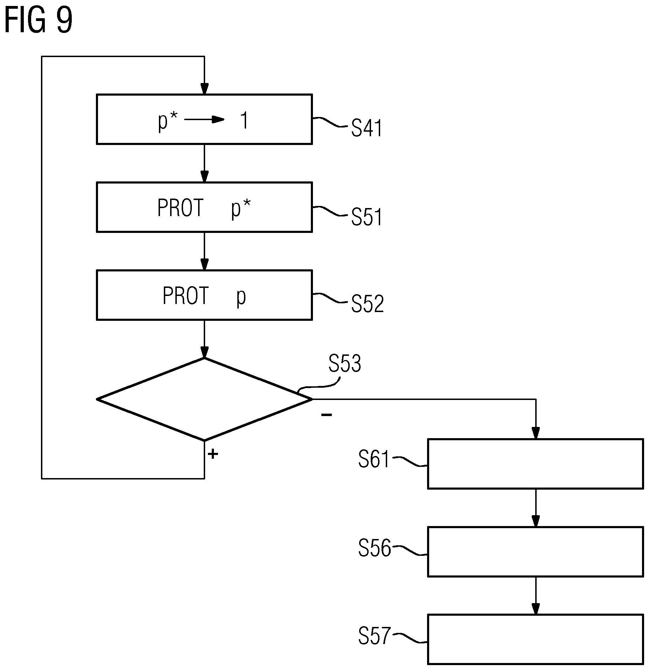

Das Abfahren der Bahn 10 mit inverser Bewegungsrichtung ist stets möglich. In manchen Fällen kann es jedoch einfacher sein, dass im Falle einer Kollision die Steuereinrichtung 15 entsprechend der Darstellung in FIG 9 in einem Schritt S56 anhand des Modells 11 im dreidimensionalen geometrischen Raum eine Richtung und/oder Orientierung des Endeffektors 2 ermittelt, in welcher der größte Freiraum zu erwarten ist. In diesem Fall kann die Steuereinrichtung 5 den Endeffektor 2 in einem Schritt S57 in diese Richtung und/oder Orientierung verfahren.

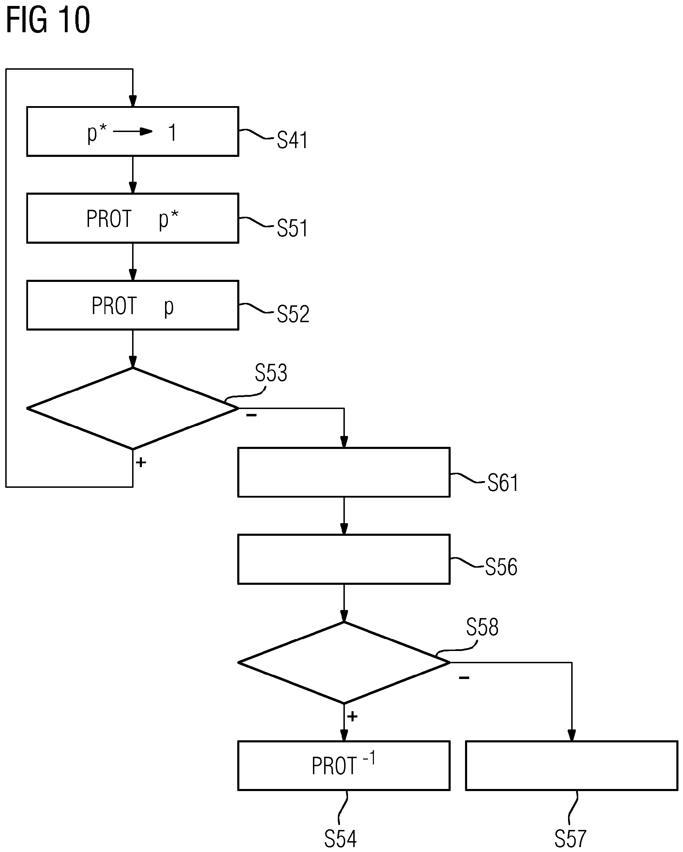

Es ist sogar möglich, die Vorgehensweise von FIG 8 und FIG 9 miteinander zu kombinieren. Dies wird nachstehend in Verbindung mit FIG 10 erläutert.

Gemäß FIG 10 ist dem Schritt S56 ein Schritt S58 nachgeordnet. Im Schritt S58 führt die Steuereinrichtung 5 eine Bewertung des Ergebnisses des Schrittes S56 durch. Je nach Bewertung geht die Steuereinrichtung 5 entweder zum Schritt S57 oder zum Schritt S54 über.

Im Falle einer Kollision - dies gilt gleichermaßen die Ausgestaltungen der FIG 7 und der FIG 8 bis 10 - öffnet die Steuereinrichtung 15 weiterhin vorzugsweise in einem Schritt S61 eine Spannvorrichtung 17 (siehe FIG 1) des Endeffektors 2 und/oder die Werkstückhalterung 14. Dadurch ist es möglich, zusätzliche Bewegungsmöglichkeiten zu schaffen, welche im Rahmen der normalen Bearbeitung des Werkstücks 13 nicht möglich sind. Denn im Rahmen der normalen Bearbeitung des Werkstücks 13 muss das Werkstück 13 in der Werkstückhalterung 14 fest gehalten sein und muss weiterhin ein Werkzeug 18 in der Spannvorrichtung 17 fest gehalten sein. Weiterhin befindet sich im Regelfall das Werkzeug 18 im Eingriff am Werkstück 13. Diese Zwangsbedingung, nämlich dass das Werkzeug 18 sich im Eingriff am Werkstück 13 befindet, kann durch das Öffnen der Spannvorrichtung 17 und/oder der Werkstückhalterung 14 aufgehoben werden. Durch das Schaffen dieser zusätzlichen Bewegungsmöglichkeiten können zum einen etwaige Schäden minimiert werden und kann zum anderen das Lösen der aufgetretenen Kollision erleichtert werden.

Die vorliegende Erfindung weist viele Vorteile auf. Insbesondere kann auf einfache Weise die Zuverlässigkeit, mit welcher vorab Kollisionen erkannt werden können, erhöht werden. Weiterhin können dennoch auftretende Kollisionen auf zuverlässige Weise wieder gelöst werden. Etwaige dennoch auftretende Schäden können minimiert werden.

Zusammengefasst betrifft die vorliegende Erfindung also folgenden Sachverhalt:
Eine Steuereinrichtung 5 einer Maschine mit mehreren lagegeregelten Achsen 1 steuert unter Abarbeitung eines Systemprogramms 6 die lagegeregelten Achsen 1 gemäß einem Teileprogramm 9 an. Durch die Ansteuerung der lagegeregelten Achsen 1 wird ein Endeffektor 2 entlang einer durch das Teileprogramm 9 definierten Bahn 10 über mindestens ein Zwischenglied 4 relativ zu einem Grundkörper 3 der Maschine lagegeregelt verfahren. Die Steuereinrichtung 5 prüft unter Abarbeitung des Systemprogramms 6 vor dem Ansteuern der lagegeregelten Achsen 1 mittels eines parametrierbaren Modells 11 der Maschine, ob das Verfahren des Endeffektors 2 entlang der durch das Teileprogramm 9 definierten Bahn 10 kollisionsfrei möglich ist. Die Steuereinrichtung 5 nimmt vor dem Prüfen des Teileprogramms 9 Anfangsmesswerte M1 entgegen, die für eine tatsächliche Konfiguration der Maschine charakteristisch sind, ermittelt anhand der Anfangsmesswerte M1 Parameter P des Modells 11 und parametriert das Modell 11 gemäß der ermittelten Parameter P.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Maschine mit mehreren lagegeregelten Achsen (1),
- wobei eine Steuereinrichtung (5) der Maschine unter Abarbeitung eines Systemprogramms (6) die lagegeregelten Achsen (1) gemäß einem Teileprogramm (9) ansteuert,
- wobei durch die Ansteuerung der lagegeregelten Achsen (1) ein Endeffektor (2) entlang einer durch das Teileprogramm (9) definierten Bahn (10) über mindestens ein Zwischenglied (4) relativ zu einem Grundkörper (3) der Maschine lagegeregelt verfahren wird,
- wobei die Steuereinrichtung (5) unter Abarbeitung des Systemprogramms (6) vor dem Ansteuern der lagegeregelten Achsen (1) mittels eines parametrierbaren Modells (11) der Maschine prüft, ob das Verfahren des Endeffektors (2) entlang der durch das Teileprogramm (9) definierten Bahn (10) kollisionsfrei möglich ist,
**dadurch gekennzeichnet, dass**
- die Steuereinrichtung (5) vor dem Prüfen des Teileprogramms (9) Anfangsmesswerte (M1) entgegennimmt, die für eine tatsächliche Konfiguration der Maschine charakteristisch sind und
- dass die Steuereinrichtung (5) vor dem Prüfen des Teileprogramms (9) anhand der Anfangsmesswerte (M1) Parameter (P) des Modells (11) ermittelt und das Modell (11) gemäß der ermittelten Parameter (P) parametriert.

2. Betriebsverfahren nach Anspruch 1,
**dadurch gekennzeichnet,**
**dass** die Steuereinrichtung (5)
- vor dem Entgegennehmen der Anfangsmesswerte (M1) eine Anfangsparametrierung (AP) des Modells (11) entgegennimmt und durch die Anfangsparametrierung (AP) des Modells (11) bestimmte Anfangsparameter (PA) des Modells (11) ermittelt,
- Differenzen (D) der Anfangsparameter (AP) von den anhand der Anfangsmesswerte (M1) ermittelten Parametern (P) des Modells (11) ermittelt,
- eine Fehlermeldung an einen Bediener (12) der Maschine ausgibt, wenn die Differenzen (D) einen vorbestimmten Grenzwert (GW) übersteigen, und anderenfalls das Modell (11) gemäß der ermittelten Parameter (P) parametriert.

3. Betriebsverfahren nach Anspruch 2,
**dadurch gekennzeichnet,**
**dass** die Steuereinrichtung (5) die Anfangsparametrierung (AP) des Modells (11) zusammen mit dem Teileprogramm (9) entgegennimmt.

4. Betriebsverfahren nach Anspruch 1, 2 oder 3,
**dadurch gekennzeichnet,**
**dass** die Steuereinrichtung (5) während der Ansteuerung der lagegeregelten Achsen (1) Betriebsmesswerte (M2) entgegennimmt, anhand der Betriebsmesswerte (M2) modifizierte Parameter (PM) des Modells (11) ermittelt und das Modell (11) entsprechend den modifizierten Parametern (PM) parametriert und dass die Steuereinrichtung (5) unter Abarbeitung des Systemprogramms (6) vor einer Fortsetzung des Ansteuerns der lagegeregelten Achsen (1) mittels des Modells (11) der Maschine erneut prüft, ob das Verfahren des Endeffektors (2) entlang der durch das Teileprogramm (9) definierten Bahn (10) kollisionsfrei möglich ist.

5. Betriebsverfahren nach einem der obigen Ansprüche,
**dadurch gekennzeichnet,**
**dass** die Steuereinrichtung (5) das Teileprogramm (9) wiederholt ausführt, dass im Rahmen der jeweiligen Ausführung mittels des Endeffektors (2) jeweils ein Werkstück (13) bearbeitet wird, dass die Steuereinrichtung (5) vor der jeweiligen Bearbeitung des jeweiligen Werkstücks (13) Messeinrichtungen (15) der Maschine ansteuert und dadurch tatsächliche Abmessungen des jeweiligen Werkstücks (13) erfasst und dass die Steuereinrichtung (5) vor der jeweiligen Ausführung des Teileprogramms (9) prüft, ob das Verfahren des Endeffektors (2) entlang der durch das Teileprogramm (9) definierten Bahn (10) in Bezug auf das jeweilige Werkstück (13) kollisionsfrei möglich ist.

6. Betriebsverfahren nach einem der obigen Ansprüche,
**dadurch gekennzeichnet,**
**dass** die Steuereinrichtung (5) anhand des Modells (11) der Maschine Paare von Elementen der Maschine ermittelt und im Rahmen der Prüfung auf Kollisionsfreiheit ausschließlich die Paare von Elementen auf Kollisionsfreiheit prüft.

7. Betriebsverfahren nach einem der obigen Ansprüche,
**dadurch gekennzeichnet,**
**dass** die Steuereinrichtung (5) während der Ansteuerung der lagegeregelten Achsen (1) Belastungen (B1) der lagegeregelten Achsen (1) und/oder Belastungen (B2) von drehzahlgeregelten Achsen (16) entgegennimmt, dass die Steuereinrichtung (5) die entgegengenommenen Belastungen (B1, B2) mit Grenzbelastungen (BG) vergleicht und dass die Steuereinrichtung (5) anhand des Vergleichs ermittelt, ob eine Kollision aufgetreten ist.

8. Betriebsverfahren nach einem der obigen Ansprüche,
**dadurch gekennzeichnet,**
**dass** die Steuereinrichtung (5) während der Ansteuerung der lagegeregelten Achsen (1) Belastungen (B1) der lagegeregelten Achsen (1) und/oder Belastungen (B2) von drehzahlgeregelten Achsen (16) entgegennimmt, dass die Steuereinrichtung (5) die entgegengenommenen Belastungen (B1, B2) mit Belastungsschwellen (BS) vergleicht und dass die Steuereinrichtung (5) anhand des Vergleichs ermittelt, ob der Endeffektor (2) sich im Eingriff mit einem Werkstück (13) befindet.

9. Betriebsverfahren nach Anspruch 7 oder 8,
**dadurch gekennzeichnet,**
**dass** das Teileprogramm (9) eine Information (F) darüber enthält, in welchen Abschnitten der vom Endeffektor (2) abzufahrenden Bahn (10) der Endeffektor (2) sich im Eingriff mit einem Werkstück (13) befinden soll.

10. Betriebsverfahren nach Anspruch 1 bis 9,
**dadurch gekennzeichnet,**
**dass** die Steuereinrichtung (5) während der Ansteuerung der lagegeregelten Achsen (1) eine Sequenz von Lagesollwerten (p*) der lagegeregelten Achsen (1) und/oder eine Sequenz von Lageistwerten (p) der lagegeregelten Achsen (1) protokolliert, so dass zu jedem Zeitpunkt zumindest für einen vorbestimmten Zeitraum die jüngsten Lagesollwerte (p*) und/oder Lageistwerte (p) der lagegeregelten Achsen (1) zur Verfügung stehen.

11. Betriebsverfahren nach Anspruch 10,
**dadurch gekennzeichnet,**
**dass** die Steuereinrichtung (5) während der Ansteuerung der lagegeregelten Achsen (1) laufend prüft, ob eine Kollision eintritt, und im Falle einer Kollision die lagegeregelten Achsen (1) gemäß der protokollierten Sequenz von Lagesollwerten (p*) und/oder Lageistwerten (p) invers ansteuert.

12. Betriebsverfahren nach Anspruch 1 bis 10,
**dadurch gekennzeichnet,**
**dass** die Steuereinrichtung (5) während der Ansteuerung der lagegeregelten Achsen (1) laufend prüft, ob eine Kollision eintritt, und im Falle einer Kollision anhand des Modells (11) eine Richtung und/oder Orientierung des Endeffektors (2) im dreidimensionalen geometrischen Raum ermittelt, in welcher der größte Freiraum zu erwarten ist, und den Endeffektor (2) in diese Richtung und/oder Orientierung verfährt.

13. Betriebsverfahren nach einem der obigen Ansprüche,
**dadurch gekennzeichnet,**
**dass** die Steuereinrichtung (5) während der Ansteuerung der lagegeregelten Achsen (1) laufend prüft, ob eine Kollision eintritt, und im Falle einer Kollision eine Spannvorrichtung (17) des Endeffektors (2) und/oder eine Werkstückhalterung (14) zum Halten eines Werkstücks (13) öffnet.

14. Systemprogramm, wobei das Systemprogramm Maschinencode (8) umfasst, der von einer Steuereinrichtung (5) für eine Maschine mit mehreren lagegeregelten Achsen (1) abarbeitbar ist, wobei die Abarbeitung des Systemprogramms durch die Steuereinrichtung (5) bewirkt, dass die Steuereinrichtung (5) die Maschine gemäß einem Betriebsverfahren nach einem der obigen Ansprüche betreibt.

15. Systemprogramm nach Anspruch 14,
**dadurch gekennzeichnet,**
**dass** es auf einem Datenträger (7) in maschinenlesbarer Form gespeichert ist.

16. Steuereinrichtung (5) für eine Maschine mit mehreren lagegeregelten Achsen (1),
**dadurch gekennzeichnet,**
**dass** sie mit einem Systemprogramm (6) nach Anspruch 14 programmiert ist.

17. Maschine mit mehreren lagegeregelten Achsen (1), durch deren Ansteuerung ein Endeffektor (2) über mindestens ein Zwischenglied (4) relativ zu einem Grundkörper (3) der Maschine lagegeregelt verfahrbar ist,
**dadurch gekennzeichnet,**
**dass** die Maschine eine Steuereinrichtung (5) nach Anspruch 16 aufweist.

## Claims

1. Method of operation for a machine with a number of position-controlled axes (1),
- wherein a control device (5) of the machine activates the position-controlled axes (1) according to a subprogram (9) while processing a system program (6),
- wherein an end effector (2) is moved by the activation of the position-controlled axes (1) along a track (10) defined by the subprogram (9) via at least one intermediate element (4) relative to a base body (3) of the machine under position control,
- wherein the control device (5) checks, by means of a parameterized model (11) of the machine before the activation of the position-controlled axes (1) while processing the system program (6), whether the movement of the end effector (2) along the track (10) defined by the subprogram (9) is possible without collisions,
**characterised in that**
- the control device (5), before the checking of the subprogram (9), accepts initial measured values (M1) which are characteristic for the actual configuration of the machine and
- the control device (5), before the checking of the subprogram (9), determines parameters (P) of the model (11) on the basis of the initial measured values (M1) and parameterizes the model (11) in accordance with the determined parameters (P).

2. Method of operation according to claim 1,
**characterised in that**
the control device (5),
- before accepting the initial measured values (M1), accepts an initial parameterization (AP) of the model (11) and, through the initial parameterization (AP) of the model (11), determines specific initial parameters (PA) of the model (11),
- determines differences (D) between the initial parameters (AP) and the parameters (P) determined by means of the initial measured values (M1) of the model (11),
- outputs an error message to an operator (12) of the machine, if the differences (D) exceed a prespecified limit value (GW) and otherwise parameterizes the model (11) in accordance with the determined parameters (P).

3. Method of operation according to claim 2,
**characterised in that**
the control device (5) accepts the initial parameterization (AP) of the model (11) together with the subprogram (9).

4. Method of operation according to claim 1, 2 or 3,
**characterised in that**
the control device (5), during the activation of the position-controlled axes (1), accepts operational measured values (M2), determines on the basis of the operational measured values (M2) modified parameters (PM) of the model (11) and parameterizes the model (11) in accordance with the modified parameters (PM) and that the control device (5), while processing the system program (6), before a continuation of the activation of the position-controlled axes (1), checks again by means of the model (11) whether the movement of the end effector (2) along the track (10) defined by the subprogram (9), is possible without collisions.

5. Method of operation according to one of the above claims,
**characterised in that**
the control device (5) executes the subprogram (9) repeatedly, as part of the respective execution a workpiece (13) is worked by the end effector (2) in each case, the control device (5), before the respective working of the respective workpiece (13), activates measurement devices (15) of the machine and thereby detects actual dimensions of the respective workpiece (13), and the control device (5) checks, before the respective execution of the subprogram (9), whether the movement of the end effector (2) along the track (10) defined by the subprogram (9) is possible without collisions in relation to the respective workpiece (13).

6. Method of operation according to one of the above claims,
**characterised in that**
the control device (5) determines pairs of elements of the machine on the basis of the model (11) of the machine and, as part of the checking for freedom from collisions, exclusively checks the pairs of elements for freedom from collisions.

7. Method of operation according to one of the above claims,
**characterised in that**
the control device (5) during activation of the position-controlled axes (1), accepts loadings (B1) of the position-controlled axes (1) and/or loadings (B2) of rpm-controlled axes (16), the control device (5) compares the accepted loadings (B1, B2) with limit loadings (BG) and the control device (5) determines on the basis of the comparison whether a collision has occurred.

8. Method of operation according to one of the above claims,
**characterised in that**
the control device (5) during activation of the position-controlled axes (1) accepts loadings (B1) of the position controlled axes (1) and/or loadings (B2) of rpm-controlled axes (16), the control device (5) compares the accepted loadings (B1, B2) with loading thresholds (BS) and the control device (5) determines on the basis of the comparison whether the end effector (2) is located in engagement with a workpiece (13) .

9. Method of operation according to claim 7 or 8,
**characterised in that**
the subprogram (9) contains information (F) about the sections of the track (10) to be traversed by the end effector (2) in which the end effector (2) is to be located in engagement with a workpiece (13).

10. Method of operation according to claim 1 to 9
**characterised in that**
the control device (5), during the activation of the position-controlled axes (1), logs a sequence of required position values (p*) of the position-controlled axes (1) and/or a sequence of actual position values (p) of the position-controlled axes (1), so that at any point in time, at least for a prespecified period of time, the most recent required position values (p*) and/or actual position values (p) of the position-controlled axes (1) are available.

11. Method of operation according to claim 10
**characterised in that**
the control device (5), during the activation of the position-controlled axes (1) continuously checks whether a collision is occurring, and in the event of a collision, activates the position-controlled axes (1) inversely in accordance with the logged sequence of required position values (p*) and/or actual position values (p).

12. Method of operation according to claim 1 to 10,
**characterised in that**
the control device (5), during activation of the position-controlled axes (1) continuously checks whether a collision is occurring and, in the event of a collision, determines on the basis of the model (11) a direction and/or orientation of the end effector (2) in the three-dimensional geometrical space, in which the greatest free space is to be expected, and moves the end effector (2) in this direction and/or orientation.

13. Method of operation according to one of the above claims,
**characterised in that**
the control device (5), during the activation of the position-controlled axes (1), continuously checks whether a collision is occurring, and in the event of a collision opens a chuck facility (17) of the end effector (2) and/or a workpiece holder (14) for holding a workpiece (13).

14. System program, wherein the system program comprises machine code (8) which is able to be processed by a control device (5) for a machine with a number of position-controlled axes (1), wherein the processing of the system program by the control device (5) has the effect that the control device (5) operates the machine in accordance with a method of operation according to one of the above claims.

15. System program according to claim 14,
**characterised in that**
it is stored on a data medium (7) in machine-readable form.

16. Control device (5) for a machine with a number of position-controlled axes (1),
**characterised in that**
it is programmed with a system program (6) according to claim 14.

17. Machine with a number of position-controlled axes (1), through the activation of which an end effector (2) is able to be moved via at least one intermediate element (4) relative to a base body (3) of the machine under position control,
**characterised in that**
the machine has a control device (5) according to claim 16.

## Revendications

1. Procédé pour faire fonctionner une machine, ayant plusieurs axes (1) réglés en position,
- dans lequel un dispositif (5) de commande de la machine commande, suivant un sous-programme (9), les axes (1) réglés en position, en élaborant un programme (6) de système,
- dans lequel, par la commande, des axes (1) réglés en position, on déplace d'une manière réglée en position, par rapport à une embase (3) de la machine, par l'intermédiaire d'au moins un organe (4) intermédiaire, un effecteur (2) terminal, le long d'une voie (10) définie par le sous-programme (9),
- dans lequel le dispositif (5) de commande contrôle, en élaborant le programme (6) de système, avant la commande des axes réglés en position, au moyen d'un modèle (11) paramétrable de la machine, si le déplacement de l'effecteur (2) terminal, le long de la voie (10) définie par le sous-programme (9), est possible sans collision,
**caractérisé**
- **en ce que** le dispositif (5) de commande reçoit, avant le contrôle du sous-programme (9), des valeurs (M1) de mesure initiales, qui sont caractéristiques d'une configuration réelle de la machine et
- **en ce que** le dispositif (5) de commande détermine, avant le contrôle du sous-programme (9), à l'aide des valeurs (M1) de mesure initiales, des paramètres (P) du modèle (11) et paramétrise le modèle (11), suivant les paramètres (P) déterminés.

2. Procédé suivant la revendication 1,
**caractérisé**
**en ce que** le dispositif (5) de commande
- reçoit, avant la réception des valeurs (M1) de mesure initiales, un paramétrage (AP) initial du modèle (11) et détermine, par le paramétrage (AP) initial du modèle (11), des paramètres (PA) initiaux déterminés du modèle (11),
- détermine des différences (D) des paramètres (AP) initiaux aux paramètres (P), déterminés à l'aide des valeurs (M1) de mesure initiales, du modèle (11),
- émet un message d'erreur vers un opérateur (12) de la machine, si les différences (D) dépassent une valeur (GW) limite déterminée à l'avance, et sinon, paramétrise le modèle (11) suivant les paramètres (P) déterminés.

3. Procédé suivant la revendication 2,
**caractérisé**
**en ce que** le dispositif (5) de commande reçoit le paramétrage (AP) initial du modèle (11), ensemble avec le sous-programme (9).

4. Procédé suivant la revendication 1, 2 ou 3,
**caractérisé**
**en ce que** le dispositif (5) de commande reçoit des valeurs (M2) de mesure de fonctionnement, pendant la commande des axes réglés en position, détermine des paramètres (PM) modifiés du modèle (11) à l'aide des valeurs (M2) de mesure de fonctionnement et paramétrise le modèle (11) en fonction des paramètres (PM) modifiés et
**en ce que** le dispositif (5) de commande contrôle, à nouveau au moyen (11) de la machine, avec élaboration du programme (6) de système, avant de continuer la commande des axes (1) réglés en position, si le déplacement de l'effecteur (2) terminal, le long de la voie (10) définie par le sous-programme (9), est possible sans collision.

5. Procédé suivant l'une des revendications précédentes
**caractérisé**
**en ce que** le dispositif (5) de commande exécute le sous-programme de manière répétée, **en ce que**, dans le cadre de l'exécution respective, une pièce (13) respective est usinée au moyen de l'effecteur (2) terminal, **en ce que** le dispositif (5) de commande commande, avant l'usinage respectif de la pièce (13) respective, des dispositifs (15) de mesure de la machine et détecte ainsi des dimensions réelles de la pièce (13) respective, et **en ce que** le dispositif (5) de commande contrôle, avant l'exécution respective du sous-programme (9), si le déplacement, par rapport à la pièce (13) respective, de l'effecteur (2) terminal, le long de la voie (10) définie par le sous-programme (9), est possible sans collision.

6. Procédé suivant l'une des revendications précédentes,
**caractérisé**
**en ce que** le dispositif (5) de commande détermine à l'aide du modèle (11) de la machine, des paires d'éléments de la machine et contrôle, dans le cadre du contrôle de l'absence de collision, exclusivement la paire d'éléments en ce qui concerne l'absence de collision.

7. Procédé suivant l'une des revendications précédentes,
**caractérisé**
**en ce que** le dispositif (5) de commande reçoit, pendant la commande des axes (1) réglés en position, des charges (B1) des axes (1) réglés en position et/ou des charges (B2) d'axes réglés en vitesse de rotation, **en ce que** le dispositif (5) de commande compare les charges (B1, B2) reçues à des charges (BG) limites, et **en ce que** le dispositif (5) de commande détermine, à l'aide de la comparaison, si une collision s'est produite.

8. Procédé suivant l'une des revendications précédentes,
**caractérisé**
**en ce que** le dispositif (5) de commande reçoit, pendant la commande des axes (1) réglés en position, des charges (B1) des axes (1) réglés en position et/ou des charges (B2) d'axes (16) réglés en vitesse de rotation, **en ce que** le dispositif (5) de commande compare les charges (B1, B2) reçues à des seuils (BS) de charge et **en ce que** le dispositif (5) de commande détermine, à l'aide de la comparaison, si l'effecteur (2) terminal se trouve en prise avec une pièce (13).

9. Procédé suivant la revendication 7 ou 8,
**caractérisé**
**en ce que** le sous-programme (9) contient en outre une information (F) indiquant la partie, de la voie (10) à parcourir par l'effecteur (2) terminal, dans laquelle l'effecteur (2) terminal doit se trouver en prise avec une pièce (13).

10. Procédé suivant l'une des revendications 1 à 9,
**caractérisé**
**en ce que** le dispositif (5) de commande consigne, pendant la commande des axes (1) réglés en position, une séquence de valeurs (p*) de consigne de position des axes réglés en position et/ou une séquence de valeurs (p) réelles de position des axes (1) réglés en position, de manière à disposer à chaque instant, au moins pour un laps de temps défini à l'avance, des valeurs (p*) de consigne de position les plus récentes et/ou des valeurs (p) réelles de position des axes (1) réglés en position.

11. Procédé suivant la revendication 10,
**caractérisé**
**en ce que** le dispositif (5) de commande contrôle d'une manière continue, pendant la commande des axes (1) réglés en position, s'il se produit une collision, et, dans le cas d'une collision, commande les axes (1) réglés en position suivant la séquence consignée de valeurs (p*) de consigne de position et/ou des valeurs (p) réelles de position.

12. Procédé suivant la revendication 1 à 10,
**caractérisé**
**en ce que** le dispositif (5) de commande contrôle en continu, pendant la commande des axes (1) réglés en position, s'il se produit une collision, et, dans le cas d'une collision, détermine à l'aide du modèle (11) une direction et/ou une orientation de l'effecteur (2) terminal dans l'espace géométrique en trois dimensions, dans lequel l'espace libre le plus grand est escompté, et déplace l'effecteur (2) terminal dans cette direction et/ou cette orientation.

13. Procédé suivant l'une des revendications précédentes,
**caractérisé**
**en ce que** le dispositif (5) de commande contrôle en continu, pendant la commande des axes (1) réglés en position, s'il se produit une collision, et, dans le cas d'une collision, ouvre un dispositif (17) de serrage de l'effecteur (2) terminal et/ou une fixation (14) de pièce pour fixer une pièce (13).

14. Programme de système, dans lequel le programme de système comprend un code de machine (8), qui peut être élaboré par un dispositif (5) de commande d'une machine ayant plusieurs axes (1) réglés en position, l'élaboration du programme de système par le dispositif (5) de commande, faisant que le dispositif (5) de commande fait fonctionner la machine suivant un procédé de fonctionnement suivant l'une des revendications précédentes.

15. Programme de système suivant la revendication 14,
**caractérisé**
**en ce qu'**il est mémorisé sur un support (7) de données sous une forme déchiffrable par un ordinateur.

16. Dispositif (5) de commande d'une machine ayant plusieurs axes (1) réglés en position,
**caractérisé**
**en ce qu'**il est programmé par un programme (6) de système suivant la revendication 14.

17. Machine, ayant plusieurs axes (1) réglés en position, par la commande de laquelle un effecteur (2) terminal peut être déplacé d'une manière réglée en position, par rapport à une embase (3) de la machine, par l'intermédiaire d'au moins un élément (4) intermédiaire,
**caractérisée**
**en ce que** la machine a un dispositif (5) de commande suivant la revendication 16.
